(19) Europäisches Patentamt

European Patent Office

Office européen des brevets

(11) **EP 0 727 113 B1**

(12) **EUROPEAN PATENT SPECIFICATION**

(45) Date of publication and mention
of the grant of the patent:
**27.07.2005 Bulletin 2005/30**

(21) Application number: **94931610.3**

(22) Date of filing: **04.11.1994**

(51) Int Cl.[7]: **H04B 10/08**

(86) International application number:
**PCT/FI1994/000496**

(87) International publication number:
**WO 1995/012928 (11.05.1995 Gazette 1995/20)**

(54) **METHOD FOR DETERMINING THE OPTICAL INPUT POWER OF AN APD RECEIVER**

VERFAHREN ZUR ERMITTLUNG DER OPTISCHEN EINGANGSLEISTUNG EINES
LAWINENPHOTODIODENEMPFÄNGERS

PROCEDE DE DETERMINATION DE LA PUISSANCE OPTIQUE D'ENTREE D'UN RECEPTEUR A
PHOTODIODE A AVALANCHE

(84) Designated Contracting States:
**DE DK FR GB IT NL SE**

(30) Priority: **05.11.1993 FI 934904**

(43) Date of publication of application:
**21.08.1996 Bulletin 1996/34**

(73) Proprietor: **Nokia Corporation**
**02150 Espoo (FI)**

(72) Inventor: **KIVIJÄRVI, Antti**
**FIN-02360 Espoo (FI)**

(74) Representative: **Äkräs, Tapio Juhani et al**
**Oy Kolster Ab,**
**Iso Roobertinkatu 23,**
**P.O. Box 148**
**00121 Helsinki (FI)**

(56) References cited:
**US-A- 5 004 907          US-A- 5 166 819**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The invention relates to a method for determining the optical input power of a receiver provided with an avalanche photo diode. A prior art technique for this task is disclosed in US patent 5004907.

An Avalanche Photo Diode (APD), being a light sensitive semiconductor diode, is generally used e.g. as a detector in receivers of long-haul optical line equipments. The most usual types of avalanche photo diodes are Germanium Avalanche Photo Diode (Ge-APD) and Indium Gallium Arsenide Avalanche Photo Diode (InGaAs-APD). In comparison to e.g. a PIN photo diode, an avalanche photo diode provides an improved sensitivity, which is due to a multiplication of photoelectric current occurring in the avalanche photo diode.

For the use of a line equipment, it is of benefit to know the optical power received by the device. The average power received by an APD can be calculated from the current of the diode and from the voltage across the diode, when the characteristic curve of the diode is known.

However, a problem is that the multiplication of the photoelectric current increases very abrubtly when the voltage across the diode approches the breakdown voltage of the diode. Even a small error in the measurement of the voltage thus leads to a great error in the calculation of the optical power. The resolution re- quired by the measurement and the magnitude (from some twenty or thirty volts to over a hundred volts) of the voltage (absolute value) makes an accurate measurement particularly difficult. Since the value of the breakdown voltage changes as a function of temperature, even an accurate measurement of the voltage would give an incorrect result at different temperatures.

For providing an accurate measurement result, a method has been developed (European Patent Application 0 360 877), for instance, in which a low-frequency current signal is superimposed on the photoelectric current and the received optical power is calculated from the resulting voltage signal. A drawback of such a solution is, however, that the circuitry required for a practical implementation is very complicated.

The input power can also be determined according to a precompiled table, by searching in the table for the optical power corresponding to a measured operating point of the diode. Because the proportion of the multiplication as well as responsivity (responsivity represents the ratio of photoelectric current to optical power, if no multiplication takes place, in other words, how high an output current is received from a diode having a predetermined optical input power, when multiplication is not taken into consideration) vary as per receiver, the tabulation method is inaccurate when conventional calibration arrangements are used. Additionally, separate tables have to be worked out for avalanche photo diodes of different types, which makes an implementation into practice difficult.

The object of the present invention is to get rid of the drawbacks described above and to provide a method by means of which it is possible to determine accurately the optical input power of an avalanche photo diode receiver without tabulation or complicated circuit arrangements. This object is achieved by the method according to the invention, which is characterized in what is set forth in the characterizing portion of claim 1.

The idea of the invention is to determine at first, on the basis of known equations, an equation between the current and optical power of a receiver circuit used, which requires that (a) a voltage acting over a diode can be solved as a function of current and (b) that this function contains a certain reference magnitude, which represents setting an operating point for the APD. Then the equation is processed in such a way that said reference magnitude and a magnitude representing the breakdown voltage of the diode constitute a ratio therein. In a carefully designed receiver, this ratio is constant regardless of temperature, and therefore, temperature needs not be considered at the calculation of power (in an example described below, this is realized by means of a temperature-compensated bias voltage source, the output voltage of which tracks changes in the breakdown voltage). Consequently, it is not necessary to know the value of the breakdown voltage, but the correct constant value of said ratio is searched for at the calibration stage. In this way, the difficulty is avoided that separate manufacturers of avalanche photo diodes inform the value of the breakdown voltage typically for a certain current, while according to theory, the current is infinite when the diode is supplied with a voltage the magnitude of which corresponds to the breakdown voltage. Subsequently, the responsivity is at first calibrated from the processed equation and then said ratio. The optical input level can then be determined within the whole range of input power and operating temperature by measuring the current of the avalanche photo diode at first.

In avalanche photo diode receivers, a biasing of a diode is typically regulated in such a way that the multiplication is strong, i.e. at its optimum as far as signal-to-noise-ratio is concerned, when the optical input level is low (at the sensitivity level). (Biasing signifies setting an operating point for an avalanche photo diode.) At high input levels, multiplication is restricted to be as low as possible for avoiding overloading of a receiving amplifier. However, the multiplication factor of an indium gallium arsenide avalanche photo diode particularly must not be restricted to be too low (minimum multiplication factor is typically about 3, whereby the receiver still operates). In a preferred embodiment of the invention, biasing occurs by means of a series resistance, whereby a decreasing multiplication factor with increasing input level can be utilized for an accurate calibration of responsivity. (Multiplication weakens the relative accuracy of the calibration of responsivity, as appears later on). Decreasing multiplication with increasing input level also provides the advantage that the dynamic range required for the measurement of the APD current is reduced considerably, without the accuracy suffering anyway (optical power is expressed in dBms, and therefore, it is not detrimental that the power measurement resolution decreases with increasing input level.)

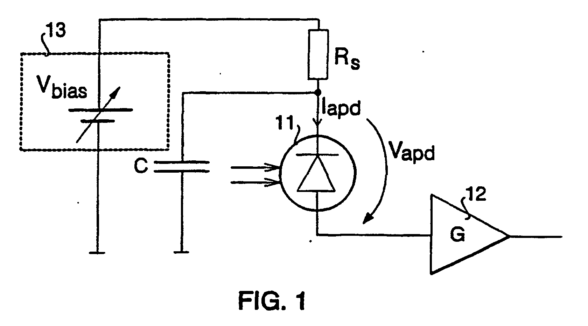

The invention and its preferred embodiments are described in more detail in the following by way of example with reference to the attached Figure 1 illustrating a receiver circuit to be used in the method of the invention.

In a circuit according to Figure 1, a receiver is biased by means of a temperature-compensated (a variation in breakdown voltage value of an APD is compensated for) voltage source 13 via a series resistance $R_s$. The anode of the avalanche photo diode 11 is connected to the input of a receiver amplifier 12 and the positive pole of the voltage source is connected via the series resistance $R_s$ to the cathode of the avalanche photo diode. The common pole of the series resistance and the avalanche photo diode is connected via a capacitor C to ground. The purpose of the capacitor is to prevent a signal to be received from entering the series resistance $R_s$. A voltage drop of the series resistance decreases the multiplication factor of the APD when the optical input level increases.

In the avalanche photo diode (11), photoelectric current is amplified by multiplication according to formulas (1) and (2):

$$I_{apd} = M \times I_p \qquad (1)$$

$$M = \frac{1}{1-\left(\dfrac{V_{apd}}{V_{br}}\right)^{\eta}} \qquad (2)$$

where

$I_{apd}$ = current of avalanche photo diode (in milliamperes)
$M$ = multiplication factor of avalanche photo diode, depending on voltage across diode
$I_p$ = non-multiplied photoelectric current (equal to that of corresponding PIN diode)
$V_{apd}$ = voltage across avalanche photo diode
$V_{br}$ = breakdown voltage of avalanche photo diode
$\eta$ = constant, depending on semiconductor material used in avalanche photo diode.

Input level (in decibels compared to milliwatt) is obtained when the effect of the multiplication factor M and the responsivity r is reduced from the current of the avalance photo diode:

$$P(dBm) = 10 \times lg\left(\frac{I_{apd}}{r \times M}\right) = 10 \times lg\left(\frac{I_{apd}}{r} \times \left(1-\left(\frac{V_{apd}}{V_{br}}\right)^{\eta}\right)\right) \qquad (3)$$

However, formula (3) is not usable as such, due to the above problems associated with the measurement of the voltage $V_{apd}$ of the avalanche photo diode, but the equation has to be solved as a function of the current $I_{apd}$. In the circuit of the example, the voltage of the avalanche photo diode depends further on the voltage $V_{bias}$ of the bias voltage source 13 and on the series resistance $R_s$:

$$V_{apd} = V_{bias} - R_s \times I_{apd}. \qquad (4)$$

In equation (4), the DC level of the amplifier input is assumed to be zero volts. However, a small deviation needs not be taken into consideration, if the deviation remains unchanged or a possible change caused by temperature has been considered at the temperature compensation of the bias voltage.

By combining the formulas (3) and (4), it is obtained:

$$P(dBm) = 10 \times lg\left[\frac{I_{apd}}{r} \times \left[1 - \left(\frac{V_{bias} - I_{apd} \times R_s}{V_{br}}\right)^{\eta}\right]\right] \quad (5)$$

In equation (5), a ratio is formed from the voltages $V_{bias}$ and $V_{br}$, which ratio can be calibrated without the value of the $V_{br}$ being known.

$$P(dBm) = 10 \times lg\left[\frac{I_{apd}}{r} \times \left[1 - \left[\frac{V_{bias}}{V_{br}} \times \left(1 - \frac{I_{apd} \times R_s}{V_{bias}}\right)\right]^{\eta}\right]\right] \quad (6)$$

The calculation of equation (6) presupposes a measurement of the voltage $V_{bias}$, no very high accuracy is required, however, and it is enough that this measurement is performed in connection with calibration only. The current $I_{apd}$ can be calculated e.g. from a voltage measured over the series resistance $R_s$.
In the method according to the invention, the procedure is as follows.
To begin with, the sensitivity of the receiver is tuned to the optimum value (i.e. the multiplication factor is tuned to its optimum value) by regulating the voltage $V_{bias}$ of the bias source 13 to its optimum value. This voltage is then not changed any more, but this regulated value is changed only if the temperature changes.
Then the responsivity is calibrated, which means that, for the responsivity r occurring in formula (6), a numerical value is searched for, by which the result calculated by means of formula (6) corresponds to the actual optical power (transmitted to the avalanche photo diode). (To make it possible to determine the value of responsivity from formula (6), the diode current $I_{apd}$ and the bias voltage $V_{bias}$ are to be determined and, for the parameter $\eta$, a value corresponding to the type of diode used is to be searched for.) This calibration step is performed at a high input level, which makes the influence of multiplication slight (multiplication factor M is as low as possible). In equation (6), the ratio $V_{bias}/V_{br}$ affecting the multiplication can be provided for the time of calibration with a typical value of about 0,97... 0,98 (calibration error caused by the inaccuracy of the value is slight in practice). (Optimum sensitivity is found in the vicinity of the breakdown voltage of the diode in the avalanche photo diode receiver. In practice, the ratio $V_{bias}/V_{br}$ is between 0,95 and 0,99, if the initial regulation of the bias voltage has been performed correctly.)
The bias regulation of the receiver with respect to the breakdown voltage of the avalanche photo diode, i.e. the ratio $V_{bias}/V_{br}$, has an abrupt effect on the multiplication. To make it possible to determine the optical power correctly also at low input levels, the accurate numerical value of the ratio has to be known. After the calibration of responsivity, the ratio must therefore be calibrated at a low input level, where multiplication is strongest. The calibration is performed by searching for a numerical value of ratio ($V_{bias}/V_{br}$), by which value the optical power calculated according to formula (6) corresponds to the actual power (transmitted to the avalanche photo diode) as accurately as possible. To make it possible to determine the value of the ratio ($V_{bias}/V_{br}$) from formula (6), the current $I_{apd}$ of the diode has to be redetermined at this input level. At this calibration stage, the value obtained above for the responsivity is also utilized, for which reason the calibration steps shall be performed in the order described above.
Accordingly, though it is not known on the basis of formula (6) in principle, which is the influence of the responsivity r on the final result, on the one hand, and which is the influence of the multiplication factor on the final result, on the other hand, formula (6) and the biasing manner used (in which the voltage across the diode is regulated according to the power level) offer an opportunity for a simple calibration, because the value of the responsivity can be searched for in a situation when the influence of the multiplication factor is known to be insignificant.
Because the input level is solved based on the physical behaviour of the multiplication, these calibrations are sufficient for solving the current/light characteristics of the avalanche photo diode within the whole input level range. At low input levels, a restriction is an error caused by a leakage current of the diode, which is, however, of practical significance only for a germanium avalanche photo diode at a high temperature.
After the calibrations, the input level can then be determined by measuring the current $I_{apd}$ of the diode and by calculating the input power on the basis of formula (6) by using the measured current value. The current can be measured in many ways (known per se), e.g. as described above by measuring the voltage accross the series resistance $R_s$ and by determining the current on the basis of the measured voltage. (At determination of input level, an accuracy of the order of 1 dBm can be achieved in practice. This presupposes that the voltage of the bias source is appropriately temperature-compensated.)
An additional advantage of the solution of the invention is that it applies to different kinds of avalanche photo diodes regardless of breakdown voltages and optimum biasings, if only the parameter $\eta$ relating to the semiconductor material is correct. The accuracy of this parameter is not critical, however, and its value can be inquired of the manufacturer of the avalanche photo diodes (e.g. from data sheets of the manufacturer). Typical values for germanium avalanche photo diodes are between 2,5 and 8 and for indium gallium arsenide avalanche photo diodes between 1 and 3.

Though the invention has been described above referring to the embodiments of the attached drawings, it is obvious that the invention is not restricted to them, but it can be varied within the scope of the inventive idea set forth in the attached claims. In principle, the solution according to the invention can be applied correspondingly also to other biasing manners comprising regulating means for regulating the bias voltage according to the optical input level. Depending on the situation, the above-mentioned ratio can also have a very different expression, according to which magnitude represents the setting of the operating point of the diode and, in turn, which magnitude represents the breakdown voltage of the diode. In the biasing according to the above example, the direction of the bias voltage and the direction of the diode can also be opposite.

## Claims

1. A method for determining the optical input power of a receiver provided with an avalanche photo diode (11), wherein:

   an equation between the optical input power and the current (Iapd) of the avalanche photo diode is determined for the receiver circuit used, which equation is processed in such a way that a reference magnitude representing setting an operating point of the diode and a magnitude representing the breakdown voltage (Vbr) of the diode constitute a ratio therein,
   a first calibration step is performed by determining at a first optical input power level a value for a responsivity (r) occurring in said equation, which value gives the value corresponding to the input power received by the diode,

   **characterized in that** a second calibration step is performed by determining said ratio at a second optical input power level,
   wherein the first and second optical input power levels are higher and lower, respectively, than a level at which a change in said ratio has an abrupt effect on the multiplication of the avalanche photo diode; and
   subsequently, the optical input power is determined by determining the current (Iapd) of the avalanche photo diode and by calculating from said equation the optical power corresponding to said current, by using the calibrated values.

2. A method according to claim 1, **characterized in that** the bias voltage (Vbias) is supplied via a series resistance (Rs) to the avalanche photo diode (11), whereby a value is determined for the ratio Vbias/Vbr of said bias voltage and the breakdown voltage of the avalanche photo diode at the second calibration step.

## Patentansprüche

1. Verfahren zum Bestimmen der optischen Eingangsleistung eines Empfängers, der mit einer Lawinenfotodiode (11) ausgestattet ist, wobei:

   - eine Gleichung zwischen der optischen Eingangsleistung und dem Strom (Iapd) der Lawinenfotodiode für die verwendete Empfängerschaltung bestimmt wird, wobei die Gleichung in solch einer Weise verarbeitet wird, dass eine Bezugsgröße, die das Einstellen eines Arbeitspunktes der Diode darstellt, und eine Größe, die die Durchbruchsspannung (Vbr) der Diode darstellt, darin ein Verhältnis bilden,
   - ein erster Kalibrierungsschritt durch Bestimmen eines Wertes für eine Ansprechempfindlichkeit (r), die in der Gleichung auftritt, bei einem ersten optischen Eingangsleistungsniveau ausgeführt wird, wobei der Wert den Wert angibt, welcher der Eingangsleistung entspricht, die von der Diode empfangen wird,
   - **dadurch gekennzeichnet, dass** ein zweiter Kalibrierungsschritt durch Bestimmen des Verhältnisses bei einem zweiten optischen Eingangsleistungsniveau ausgeführt wird,
   - wobei das erste und zweite optische Eingangsleistungsniveau höher beziehungsweise niedriger als ein Niveau sind, bei welchem eine Veränderung des Verhältnisses einen abrupten Effekt auf die Vervielfachung der Lawinenfotodiode aufweist, und
   - anschließend die optische Eingangsleistung durch Bestimmen des Stromes (Iapd) der Lawinenfotodiode und durch Berechnen der optischen Leistung, die dem Strom entspricht, aus der Gleichung, durch Verwendung der kalibrierten Werte bestimmt wird.

**2.** Verfahren nach Anspruch 1, **dadurch gekennzeichnet, dass** die Vorspannung (Vbias) der Lawinenfotodiode (11) durch einen Reihenwiderstand (Rs) bereitgestellt wird, wobei ein Wert für das Verhältnis Vbias/Vbr der Vorspannung und der Durchbruchsspannung der Lawinenfotodiode in dem zweiten Kalibrierungsschritt bestimmt wird.

**Revendications**

**1.** Procédé pour déterminer la puissance d'entrée optique d'un récepteur pourvu d'une photodiode à avalanche (11), dans lequel :

une équation entre la puissance d'entrée optique et le courant (Iapd) de la photodiode à avalanche est déterminée pour le circuit de récepteur utilisé, laquelle équation est traitée de sorte qu'une amplitude de référence représentant le réglage d'un point de fonctionnement de la diode et une amplitude représentant la tension de claquage (Vbr) de la diode constituent un rapport dans celle-ci,
une première étape d'étalonnage est effectuée en déterminant, à un premier niveau de puissance d'entrée optique, une valeur pour une sensibilité (r) apparaissant dans ladite équation, laquelle valeur donne la valeur correspondant à la puissance d'entrée reçue par la diode,

**caractérisé en ce qu'**une deuxième étape d'étalonnage est effectuée en déterminant ledit rapport à un deuxième niveau de puissance d'entrée optique,
dans lequel les premier et deuxième niveaux de puissance d'entrée optique sont respectivement supérieur et inférieur à un niveau auquel une variation dudit rapport a un effet soudain sur la multiplication de la photodiode à avalanche ; et
par la suite, la puissance d'entrée optique est déterminée en déterminant le courant (Iapd) de la photodiode à avalanche et en calculant, à partir de ladite équation, la puissance optique correspondant audit courant, en utilisant les valeurs étalonnées.

**2.** Procédé selon la revendication 1, **caractérisé en ce que** la tension de polarisation (Vbias) est délivrée, par l'intermédiaire d'une résistance série (Rs), à la photodiode à avalanche (11), moyennant quoi une valeur est déterminée pour le rapport Vbias/Vbr de ladite tension de polarisation et de la tension de claquage de la photodiode à avalanche au cours de la deuxième étape d'étalonnage.

FIG. 1